# EUROPÄISCHE PATENTANMELDUNG

(11) **EP 3 120 957 A1**
(43) Veröffentlichungstag der Anmeldung: **25.01.2017**
(21) Anmeldenummer: 16162333.5
(22) Anmeldetag: 24.03.2016
(51) Int. Cl.: B23B 31/20, B23H 1/04, B23H 7/26

(54) **SPANNZANGENSYSTEM MIT POSITIONIERUNG**

(30) Priorität: 23.07.2015 DE 102015112049
(71) Anmelder: Stoba Sondermaschinen GmbH, 87700 Memmingen (DE)
(72) Erfinder: Günther, Oliver, 87700 Memmingen (DE); Wagner, Ulrich, 87700 Memmingen (DE)
(74) Vertreter: Winter, Brandl, Fürniss, Hübner, Röss, Kaiser, Polte - Partnerschaft mbB

(57) **Zusammenfassung**

Die Erfindung betrifft eine Spannvorrichtung (1) für ein Werkzeug (2), mit einem ein Aufnahmeloch (4) zur Aufnahme des Werkzeuges (2) aufweisenden Basisbauteil (3) und mit einer mit dem Basisbauteil (3) verbundenen Spannzangeneinheit (5), wobei die Spannzangeneinheit (5) eine zumindest abschnittsweise in dem Aufnahmeloch (4) angeordnete Spannhülse (6) aufweist und diese Spannhülse (6) derart in dem Basisbauteil (3) aufgenommen ist, dass sich ein Innendurchmesser der Spannhülse (6) bei ihrem Verschieben entlang des Aufnahmeloches (4) verstellt, wobei mit dem Basisbauteil (3) ein Drehsicherungsabschnitt (8) verbunden ist, der sich zumindest teilweise, unter Ausbildung eines in Umfangsrichtung des Aufnahmeloches (4) wirkenden Anschlags, quer in das Aufnahmeloch (4) hinein erstreckt; sowie ein Werkzeugsystem (11) mit einem Werkzeug (2) sowie einer solchen Spannvorrichtung (1).

## Beschreibung

Die Erfindung betrifft eine Spannvorrichtung / ein Spannzangensystem für ein (vorzugsweise elektrochemisches) Werkzeug, wie vorzugsweise einer Elektrode / Kathode, mit einem ein Aufnahmeloch zur Aufnahme des Werkzeuges aufweisenden Basisbauteil und mit einer mit dem Basisbauteil verbundenen Spannzangeneinheit, wobei die Spannzangeneinheit eine zumindest abschnittsweise in dem Aufnahmeloch angeordnete Spannhülse aufweist und diese Spannhülse derart in dem Basisbauteil aufgenommen ist, dass sich ein Innendurchmesser der Spannhülse bei ihrem Verschieben entlang des Aufnahmeloches verstellt. Im Weiteren betrifft die Erfindung auch ein Werkzeugsystem mit einem vorzugsweise elektrochemischen Werkzeug, wie einer Elektrode / Kathode, sowie einer solchen Spannvorrichtung.

Aus dem Stand der Technik sind bereits gattungsgemäße Spannvorrichtungen bekannt. So offenbart bspw. die DE 1 243 298 B eine Vorrichtung zur sicheren und weitgehend verlustfreien Stromzuführung zu einem Werkzeugspannelement einer elektrolytischen Schleifmaschine, bei der das Spannelement gegenüber der Schleifscheibe einstellbar in einem Gehäuse drehbar gelagert ist.

Bei solchen bekannten Ausführungen hat es sich jedoch als Nachteil herausgestellt, dass das Werkzeug relativ zu der Spannvorrichtung, etwa beim Tausch eines verschlissenen Werkzeuges, nicht oder nur relativ ungenau in seiner Drehposition zum Basisbauteil ausgerichtet werden kann. Bei manchen Bearbeitungen insbesondere in elektrochemischen Bearbeitungsprozessen von Werkstücken ist jedoch eine stets gleichbleibende Ausrichtung der vor allem an der Spitze unsymmetrisch ausgebildeten Werkzeuge notwendig, um eine exakte Bearbeitung zu gewährleisten. Ein neues Werkzeug kann bisher nicht oder nur sehr schwer verlässlich in die gleiche Drehstellung gebracht werden, wie das zuvor in der Spannvorrichtung aufgenommene, verschlissene Werkzeug.

Es ist daher die Aufgabe der vorliegenden Erfindung, diese aus dem Stand der Technik bekannten Nachteile zu beheben und insbesondere eine Spannvorrichtung zur Verfügung zu stellen, durch die das auszutauschende Werkzeug besonders reproduzierbar angeordnet werden können soll.

Dies wird erfindungsgemäß dadurch gelöst, dass mit dem Basisbauteil ein Drehsicherungsabschnitt verbunden ist, der sich zumindest teilweise, unter Ausbildung eines in Umfangsrichtung des Aufnahmeloches wirkenden Anschlags, quer in das Aufnahmeloch hinein erstreckt.

Durch den Drehsicherungsabschnitt ist ein Anschlag umgesetzt, der in dem Basisbauteil fest angeordnet / befestigt ist, so dass das jeweilige Werkzeug besonders reproduzierbar nach einem Austausch in der Spannvorrichtung einbringbar ist. Das Werkzeug braucht dann nur noch in das Aufnahmeloch eingeschoben werden bis es zu einem Kontakt zwischen dem Werkzeug und dem Drehsicherungsabschnitt kommt. Der Austausch wird dadurch wesentlich vereinfacht und die Effektivität der Bearbeitung weiter gesteigert.

Weitere vorteilhafte Ausführungsformen sind in den Unteransprüchen beansprucht und nachfolgend näher erläutert.

Vorteilhaft ist es auch, wenn der Drehsicherungsabschnitt einen Anschlag für das Werkzeug in axialer Richtung des Aufnahmeloches ausbildet. Dann ist das Werkzeug beim Einschieben in das Basisbauteil gleichzeitig sowohl in seiner axialen Lage als auch in einer bestimmten Drehposition gesichert.

Ist der Drehsicherungsabschnitt als ein separat von dem Basisbauteil hergestelltes Positionierungselement ausgebildet, ist der Drehsicherungsabschnitt auf einfach Weise herstellbar und in dem Basisbauteil integrierbar.

In diesem Zusammenhang ist es besonders vorteilhaft, wenn das Positionierungselement stiftförmig / stiftartig / als Stift ausgebildet ist. Dadurch ist die Herstellung des Positionierungselements sowie der gesamten Spannvorrichtung kostengünstig umgesetzt.

Ist das Positionierungselement in dem Basisbauteil formschlüssig und/oder kraftschlüssig aufgenommen, ist das Positionierungselement besonders stabil befestigt.

Ist das Positionierungselement in zumindest einer Bohrung innerhalb des Basisbauteils eingeschoben / eingesetzt, ist das Positionierungselement besonders kompakt in dem Basisbauteil befestigt.

In diesem Zusammenhang ist es auch weiterhin von Vorteil, wenn das Positionierungselement in seiner Längsrichtung quer, vorzugsweise senkrecht, zu der Längsachse des Aufnahmeloches ausgerichtet angeordnet ist. Dadurch ist das Positionierungselement noch kompakter in dem Basisbauteil aufgenommen.

Das Positionierungselement erstreckt sich weiterhin vorteilhafterweise in seiner Längsrichtung zylindrisch, mit einem vorzugsweise kreisrunden Querschnitt. Dadurch ist das Positionierungselement besonders kostengünstig, bspw. als Bolzen, hergestellt.

Durchquert das Positionierungselement das Aufnahmeloch in seiner Querrichtung vollständig, ist das Positionierungselement an zwei Stellen stabil abgestützt.

Im Weiteren umfasst die Erfindung ein Werkzeugsystem mit einem (vorzugsweise elektrochemischen) Werkzeug, besonders bevorzugt einem elektrochemischen Werkzeug, sowie einer Spannvorrichtung nach einer der zuvor beschriebenen Ausführungen, wobei das Werkzeug eine Ausrichterhabenheit aufweist, die an dem Drehsicherungsabschnitt in zumindest einer Arbeitsstellung des Werkzeugsystems verdrehsicher und axialfest anliegt. Dadurch ist eine reproduzierbare Bearbeitung durch das Werkzeugsystem möglich.

Die Ausrichterhabenheit ist weiter vorteilhafterweise an einer axialen Stirnseite des Werkzeuges angeordnet oder bildet diese axiale Stirnseite (unmittelbar) aus, wobei die Stirnseite in der Arbeitsstellung in das Aufnahmeloch eingeschoben ist. Damit ist eine besonders kompakte Bauweise des Werkzeuges umgesetzt und das Werkzeug muss nur geringfügig zur drehsicheren und axialen Sicherung angepasst werden.

Ist die Ausrichterhabenheit Teil eines abgeschrägten Endes des Werkzeuges, ist sie besonders kostengünstig herstellbar.

Von Vorteil ist es im Weiteren, wenn die Ausrichterhabenheit in einem in radialer Richtung des Aufnahmeloches zwischen dem Drehsicherungsabschnitt und dem Basisbauteil gebildeten Zwischenraum in der Arbeitsstellung verdrehsicher eingeschoben ist. Dadurch ist die Drehsicherung besonders effektiv umgesetzt.

In diesem Zusammenhang ist es zudem vorteilhaft, wenn die Ausrichterhabenheit derart auf den Drehsicherungsabschnitt abgestimmt ist, dass das Werkzeug bei einem Einschieben in das Aufnahmeloch selbsttätig in den Zwischenraum drehgesichert hineingleitet. Dadurch ist eine besonders effektive, vor allem formschlüssige Befestigung des Werkzeuges in der Arbeitsstellung umgesetzt.

Weiterhin ist es auch zweckmäßig, wenn das Werkzeug als eine, für eine elektrochemische Bearbeitung eines Werkstückes vorbereitete Elektrode, vorzugsweise eine Kathode ausgebildet ist. Insbesondere bei solchen Werkzeugen ist die erfindungsgemäße Spannvorrichtung besonders effizient einsetzbar, da es hier zumeist auf eine besonders verlässliche Positionierung der Kathode relativ zur Spannvorrichtung bzw. zum Werkstück ankommt. Die Kathode ist weiter bevorzugt röhrenförmig / rohrförmig ausgestaltet.

Die Erfindung wird nun nachfolgend anhand von Figuren näher erläutert.

Es zeigen:

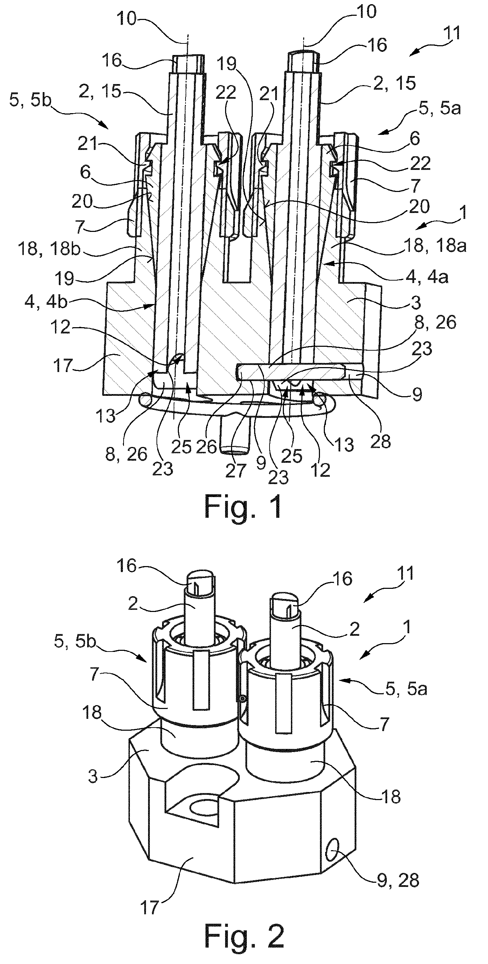

- Fig. 1: eine isometrische Teilansicht einer erfindungsgemäßen Spannvorrichtung sowie eines erfindungsgemäßen Werkzeugsystems nach einem ersten Ausführungsbeispiel, wobei die Spannvorrichtung entlang ihrer beiden jeweils ein Werkzeug aufnehmenden Aufnahmelöcher geschnitten ist, wodurch insbesondere der durch das Positionierungselement ausgebildete Drehsicherungsabschnitt innerhalb des Basisbauteils zu erkennen ist,
- Fig. 2: eine isometrische Darstellung des gesamten Werkzeugsystems samt Spannvorrichtung des ersten Ausführungsbeispiels nach Fig. 1, wobei besonders gut die jeweils eine Spannhülse axial verstellenden Spannmuttern zweier Spannzangeneinheiten zu erkennen sind,

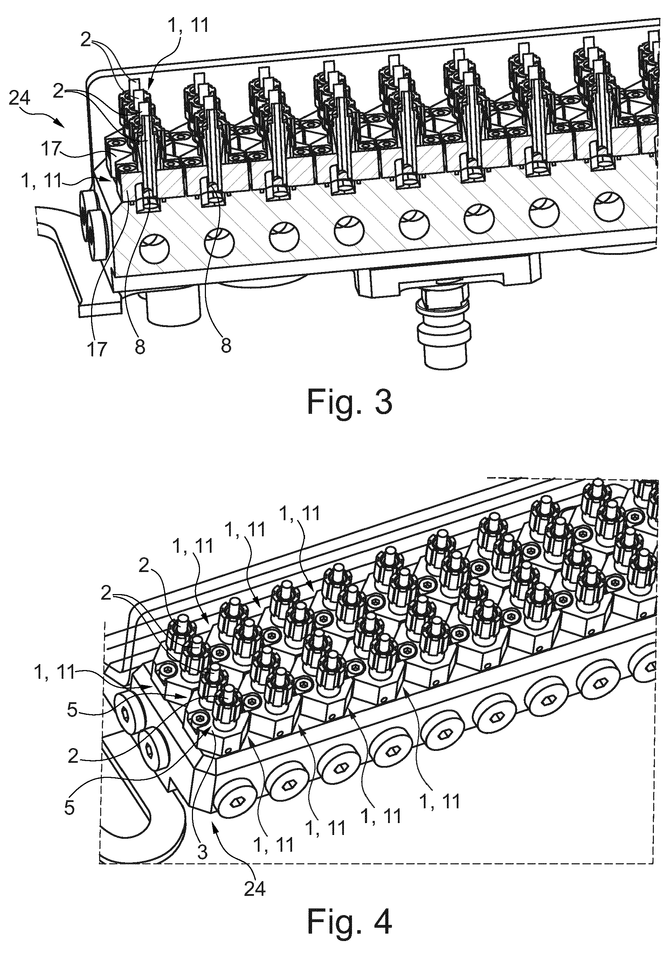

- Fig. 3: eine isometrische Ansicht eines teilweise geschnitten dargestellten Spannbetts mit mehreren der Spannvorrichtungen nach den Fign. 1 und 2, wobei das Spannbett derart geschnitten ist, dass jeweils ein Aufnahmeloch mehrerer nebeneinander angeordneter Spannvorrichtungen in Längsrichtung geschnitten ist, wobei die an dem jeweiligen Werkzeug ausgebildete Schräge zur drehsicheren Anlage an dem Drehsicherungsabschnitt erkennbar ist, und
- Fig. 4: eine isometrische Ansicht des gesamten Spannbettes aus Fig. 3, wobei nun die nebeneinander angeordneten Spannvorrichtungen von einer Oberseite dargestellt sind.

Die Figuren sind lediglich schematischer Natur und dienen ausschließlich dem Verständnis der Erfindung. Die gleichen Elemente sind mit denselben Bezugszeichen versehen.

Die erfindungsgemäße Spannvorrichtung 1 gemäß einem ersten Ausführungsbeispiel ist in den Fign. 1 und 2 veranschaulicht. Die Spannvorrichtung 1 ist hierbei zur Aufnahme eines Werkzeuges 2, d.h. zum Spannen / Einspannen des Werkzeuges 2 vorgesehen / vorbereitet. Das Werkzeug 2 an sich ist in diesen Figuren bereits in der Spannvorrichtung 1 eingesetzt und kraft- sowie formschlüssig aufgenommen / gehalten. Das Werkzeug 2 an sich ist als elektrochemisches Werkzeug / Bearbeitungswerkzeug in Form einer als Kathode 15 wirkenden Elektrode ausgebildet. Das Werkzeug 2 ist daher, in anderen Worten ausgedrückt, zum elektrochemischen Bearbeiten eines Werkstückes 16 ausgebildet. Das Werkzeug 2, wie in Fig. 1 weiter zu erkennen, ist im Wesentlichen röhrenförmig ausgebildet, weshalb die Kathode 15 auch als Röhrenkathode bezeichnet ist. Das zu bearbeitende Werkstück 16 ist in den Fig. 1 und 2 ein Rohrelement, das auf dem jeweiligen Werkzeug 2 aufgesetzt ist.

Die Spannvorrichtung 1 weist auf übliche Weise ein sockelartiges Basisbauteil 3 auf, das in dieser Ausführung zwei Aufnahmelöcher 4 aufweist. Neben einem ersten gerade verlaufenden Aufnahmeloch 4a erstreckt sich ein zweites gerade verlaufendes Aufnahmeloch 4b parallel in dem Basisbauteil 3. Beide Aufnahmelöcher 4; 4a, 4b sind als Durchgangslöcher ausgebildet.

Das Basisbauteil 3 weist einen plattenförmigen / sich entlang einer gedachten Plattenebene ausbreitenden Grundkörper 17 sowie zwei sich senkrecht zu dem Grundkörper 17 / der Plattenebene des Grundkörpers 17, von dem Grundkörper 17 weg erstreckende Nabenabschnitte 18 auf. Die jeweils gleich ausgebildeten, stutzenförmigen Nabenabschnitte 18 sind je von einem der Aufnahmelöcher 4 durchdrungen. Das erste Aufnahmeloch 4a durchdringt den ersten Nabenabschnitt 18a mit, das zweite Aufnahmeloch 4b durchdringt einen, benachbart zu dem ersten Nabenabschnitt 18a auf dem Grundkörper 17 angeordneten, zweiten Nabenabschnitt 18b mit. Die beiden Nabenabschnitte 18; 18a, 18b erstrecken sich ebenfalls entlang der gedachten Längsachse 10 des jeweiligen Aufnahmeloches 4; 4a, 4b. Die Aufnahmelöcher 4 durchdringen sowohl den jeweiligen Nabenabschnitt 18 als auch den Grundkörper 17 vollständig.

Mit dem Basisbauteil 3 sind zwei Spannzangeneinheiten 5 verbunden, wobei eine erste Spannzangeneinheit 5a dem ersten Nabenabschnitt 18a und eine zweite Spannzangeneinheit 5b dem zweiten Nabenabschnitt 18b zugeordnet ist. Da beide Spannzangeneinheiten 5; 5a, 5b gleich aufgebaut sowie gleich an den jeweiligen Nabenabschnitt 18; 18a, 18b angebracht sind, ist nachfolgend der Kürze wegen nur auf die erste Spannzangeneinheit 5a und deren Anordnung an dem ersten Nabenabschnitt 18a eingegangen, wobei diese Ausführungen auch für die zweite Spannzangeneinheit 5b und deren Anordnung an dem zweiten Nabenabschnitt 18b gelten. Auch ist es möglich, wie in einer weiteren Ausführung umgesetzt, an dem Basisbauteil 3 nur eine einzelne Spannzangeneinheit 5 anzubringen.

In einem dem Grundkörper 17 abgewandten Endbereich des ersten Nabenabschnittes 18a ist eine Spannmutter 7 der ersten Spannzangeneinheit 5a befestigt, nämlich aufgeschraubt. Dabei ist die Spannmutter 7 mit einem Innengewindebereich auf ein auf dem Nabenabschnitt 18 angebrachten Außengewindebereich aufgeschraubt. Neben der Spannmutter 7 weist die erste Spannzangeneinheit 5a eine Spannhülse 6 (auch als Spannzange bezeichnet) auf. Die Spannhülse 6 ist in Längsrichtung in das Aufnahmeloch 4; 4a eingesetzt. Die Spannhülse 6 ist zudem konzentrisch in dem Aufnahmeloch 4; 4a eingeschoben. Die Spannhülse 6 weist auf übliche Weise mehrere, hier der Übersichtlichkeit halber nicht weiter dargestellte, axiale (d.h. entlang des Aufnahmelochs 4; 4a erstreckende) Schlitze auf, welche Schlitze sich über einen axialen Teilbereich der Spannhülse 6 hinwegerstrecken und dadurch mehrere in radialer Richtung elastisch verformbare Laschen ausbilden. Schräg zu der Längsachse 10 des Aufnahmeloches 4; 4a ausgerichtet, ist an der Spannhülse 6 eine ringförmige, konische Schrägwandung 19 ausgebildet, wobei jede Lasche einen Umfangsteil dieser Schrägwandung 19 mit ausbildet. Die Spannhülse 6 ist derart in dem Aufnahmeloch 4; 4a eingeschoben, dass sich die Schrägwandung 19 an einer komplementär zu ihr ausgebildeten, ebenfalls konischen Innenwandung 20 des Basisbauteils 3 abstützt. Die konische Innenwandung 20 ist dabei hauptsächlich in axialer Richtung im Bereich des ersten Nabenabschnittes 18a ausgebildet.

Ein Innendurchmesser der Spannhülse 6, d.h. eine Größe des durch die Spannhülse 6 ausgebildeten Innenloches ist auf übliche Weise dadurch veränderbar / einstellbar, dass die Spannhülse 6 mit Hilfe der Spannmutter 7, nämlich durch Verdrehen der Spannmutter 7 in einer Drehrichtung, in axialer Richtung des Aufnahmeloches 4; 4a entlang der Innenwandung 20 verschiebbar ist. Etwa bei einem Drehen der Spannmutter 7 in einer ersten Drehrichtung kommt es durch das Ineinandereingreifen zwischen dem Innengewindebereich und dem Außengewindebereich zu einem axialen Verschieben der Spannmutter 7 relativ zu dem ersten Nabenabschnitt 18a in einer ersten axialen Richtung des Aufnahmeloches 4; 4a. Da die Spannmutter 7 und die Spannhülse 6 in axialer Richtung verschiebefest miteinander verbunden sind, nämlich verschiebefest ineinander eingreifen, kommt es bei Verdrehen der Spannmutter 7 auch zu einem Verschieben der Spannhülse 6 in der ersten axialen Richtung. Zur axialen Kopplung der Spannmutter 7 mit der Spannhülse 6, d.h. zur festen Verbindung in axialer Richtung, weist die Spannmutter 7, auf ihrer Innenumfangsseite einen ringförmigen Vorsprung 21 auf, der in eine Radialnut 22 an der Spannhülse 6, in einem axial zu der Schrägwandung 19 beabstandeten Bereich, eingreift.

Aufgrund der axialen Verschiebung der Spannhülse 6 in der ersten axialen Richtung, gleitet die Schrägwandung 19 an der Innenwandung 20 entlang, sodass sich dabei der Innendurchmesser der Spannhülse 6 verkleinert. Der Innendurchmesser der Spannhülse 6 wird soweit verkleinert, bis die das Innenloch ausbildende Innenumfangsseite der Spannhülse 6 das Werkzeug 2 mit einer ausreichenden Spannkraft umschließt, sodass das Werkzeug 2 in einer Arbeitsstellung des Werkzeugsystems 11 - bestehend aus Spannvorrichtung 1 und Werkzeug 2 - fest in der Spannvorrichtung 1 eingespannt ist. Bei einer umgekehrten Verdrehung der Spannmutter 7 in einer zweiten Drehrichtung, wird der Innendurchmesser der Spannhülse 6 wiederum vergrößert und das Werkzeug 2 gelöst.

Wie weiterhin besonders gut in Fig. 1 zu erkennen, ist erfindungsgemäß in jeweils einem Aufnahmeloch 4; 4a, 4b der Spannvorrichtung 1 ein Positionierungselement 26 angeordnet. Das Positionierungselement 26 ist in einer Bohrung 9 in dem Basisbauteil 3 formschlüssig (in Bezug auf die Längsachse 10 des Aufnahmeloches 4 betrachtet) sowie kraftschlüssig in Bezug auf seine Längsrichtung befestigt. Das Positionierungselement 26 ist als Stift, d.h. stiftförmig ausgebildet, und erstreckt sich entlang seiner Längsrichtung gerade sowie zylindrisch. Die Bohrung 9 ist als eine Sacklochbohrung ausgebildet und durchquert das Aufnahmeloch 4 vollständig. Die Bohrung 9 verläuft in einer Ebene, die senkrecht zu der Längsachse 10 des jeweiligen Aufnahmeloches 4; 4a, 4b ausgerichtet ist. Die Bohrung 9 je Positionierungselement 26 ist aus zwei Abschnitten, nämlich einem Sacklochabschnitt 27 und einem Durchgangsabschnitt 28 in dem Basisbauteil 3 eingebracht. Der Durchgangsabschnitt 28 durchdringt das Basisbauteil 3 von der Umgebung her bis zu dem Aufnahmeloch 4; 4a, 4b. Der Sacklochabschnitt 27 erstreckt sich von dem Aufnahmeloch 4; 4a, 4b aus in das Basisbauteil 3 hinein. Das Positionierungselement 26 ist somit in seinem in der Bohrung 9 eingeschobenen / befestigten Zustand quer / schräg, nämlich senkrecht zu dem Aufnahmeloch 4; 4a, 4b ausgerichtet und positioniert.

Das Positionierungselement 26 ist derart ausgestaltet und auf das Werkzeug 2 abgestimmt, dass das Werkzeug 2 in der Arbeitsstellung in axialer Richtung des Aufnahmeloches 4; 4a, 4b mit seiner in das Aufnahmeloch 4; 4a, 4b hineinragenden Stirnseite 13 an dem Positionierungselement 26 abgestützt ist. Zugleich ist das Positionierungselement 26 derart angeordnet und das Werkzeug 2 mit seiner dem Positionierungselement 26 zugewandten Stirnseite 13 derart ausgestaltet, dass das Werkzeug 2 in der Arbeitsstellung des Werkzeugsystems 11 verdrehsicher / winkeltreu in der Spannvorrichtung 1 eingesetzt ist. Somit bildet das Positionierungselement 26 einen Drehsicherungsabschnitt 8 für das Werkzeug 2 aus. Der Drehsicherungsabschnitt 8 ist aufgrund seiner Ausgestaltung als Positionierungselement 26 mit dem Basisbauteil 3 verbunden und dient mit seinem das Aufnahmeloch 4; 4a, 4b durchquerenden / hineinragenden / in dem Aufnahmeloch 4; 4a, 4b angeordneten Abschnitt, als ein in Umfangsrichtung des Aufnahmeloches 4; 4a, 4b wirkender Anschlag.

Weiterhin weist das Werkzeug 2 eine Ausrichterhabenheit 12 auf, die ein abgeschrägtes Ende in Form einer Anlageschräge 23 des Werkzeuges 2 ausbildet. Die Ausrichterhabenheit 12 ist unmittelbar in das Werkzeug 2, nämlich an der dem Positionierungselement 26 in der Arbeitsstellung des Werkzeugsystems 11 zugewandten Stirnseite 13, eingebracht. Die Anlageschräge 23 bildet somit die Stirnseite 13 des Werkzeuges 2 aus, die nicht nur rein in axialer Richtung des Aufnahmeloches 4; 4a, 4b an dem Drehsicherungsabschnitt 8 / dem Positionierungselement 26 abgestützt ist / anliegt, sondern die sich auch um einen gewissen axialen Bereich entlang des Aufnahmeloches 4; 4a, 4b an dem Positionierungselement 26 vorbeierstreckt und dieses drehfest umgreift / überdeckt. In anderen Worten ausgedrückt, ist die Ausrichterhabenheit 12 / die Anlageschräge 23 dadurch in einem in radialer Richtung des Aufnahmeloches 4; 4a, 4b zwischen dem Drehsicherungsabschnitt 8 und dem Basisbauteil 3 gebildeten Zwischenraum 25 in der Arbeitsstellung verdrehsicher eingeschoben. Die Anlageschräge 23 ist sowohl schräg zu der Längsachse 10 als auch zu einer gedachten Radialebene der Längsachse 10, zu welcher Radialebene die Längsachse 10 als Normale ausgebildet ist, in der Arbeitsstellung angestellt.

Die Anlageschräge 23 ist derart ausgebildet sowie auf das Positionierungselement 26 geometrisch abgestimmt, dass das Werkzeug 2 bei seiner Montage in der Spannvorrichtung 1 mit seiner Anlageschräge 23 an dem Positionierungselement 26 in Anlage gerät und die Ausrichterhabenheit 12 drehsicher in das Basisbauteil 3 eingeschoben wird. Durch anschließende kraftschlüssige Befestigung des Werkzeuges 2 mittels der Spannzangeneinheit 5 - Spannhülse 6 sowie Spannmutter 7 - ist das Werkzeug 2 form- und kraftschlüssig in der Spannvorrichtung 1 gehalten. Insbesondere überträgt die Spannzange / die Spannhülse 6 mittels der Spannmutter 7 beim Schließen der Spannzangeneinheit 5 eine Abwärtsbewegung auch auf das Werkzeug 2, wodurch das Werkzeug 2 in die vorgegebene / seine Ausrichtung (durch die Ausrichterhabenheit 12 / Anlageschräge 23 und das Positionierungselement 26 vorgegeben) gedrückt wird. Dies minimiert Einlegefehler des Werkzeuges 2. Beim Austausch des jeweiligen Werkzeuges 2 ist lediglich die Spannmutter 7 wieder zu lösen, so dass sich die Spannhülse 6 in ihrem Innendurchmesser vergrößert und das Werkzeug 2 herauszuziehen. Daraufhin ist dann einfach ein neues, unverschlissenes Werkzeug 2 einzusetzen, wobei dieses auf gleiche Weise wie das zuvor eingesetzte Werkzeug 2 mit dem Einschieben in axialer Richtung des Aufnahmeloches 4 an dem Positionierungselement 26 in Anlage kommt und dabei verdrehgesichert wird.

In den Fign. 3 und 4 ist dann nochmals besonders gut die erfindungsgemäße Spannvorrichtung 1 in einem Spannbett 24 zusammen mit einer Vielzahl gleich ausgebildeter Spannvorrichtungen 1 angeordnet. Hierbei dienen jeweils zwei Werkzeuge 2 einer Spannvorrichtung 1 zur Bearbeitung der Werkstücke 16.

## Patentansprüche

1. Spannvorrichtung (1) für ein Werkzeug (2), mit einem ein Aufnahmeloch (4) zur Aufnahme des Werkzeuges (2) aufweisenden Basisbauteil (3) und mit einer mit dem Basisbauteil (3) verbundenen Spannzangeneinheit (5), wobei die Spannzangeneinheit (5) eine zumindest abschnittsweise in dem Aufnahmeloch (4) angeordnete Spannhülse (6) aufweist und diese Spannhülse (6) derart in dem Basisbauteil (3) aufgenommen ist, dass sich ein Innendurchmesser der Spannhülse (6) bei ihrem Verschieben entlang des Aufnahmeloches (4) verstellt, **dadurch gekennzeichnet, dass** mit dem Basisbauteil (3) ein Drehsicherungsabschnitt (8) verbunden ist, der sich zumindest teilweise, unter Ausbildung eines in Umfangsrichtung des Aufnahmeloches (4) wirkenden Anschlags, quer in das Aufnahmeloch (4) hinein erstreckt.

2. Spannvorrichtung (1) nach Anspruch 1, **dadurch gekennzeichnet, dass** der Drehsicherungsabschnitt (8) einen Anschlag für das Werkzeug (2) in axialer Richtung des Aufnahmeloches (4) ausbildet.

3. Spannvorrichtung (1) nach Anspruch 1 oder 2, **dadurch gekennzeichnet, dass** der Drehsicherungsabschnitt (8) als ein separat von dem Basisbauteil (3) hergestelltes Positionierungselement (26) ausgebildet ist.

4. Spannvorrichtung (1) nach Anspruch 3, **dadurch gekennzeichnet, dass** das Positionierungselement (26) in dem Basisbauteil (3) form- und/oder kraftschlüssig aufgenommen ist.

5. Spannvorrichtung (1) nach Anspruch 3 oder 4, **dadurch gekennzeichnet, dass** das Positionierungselement (26) in zumindest einer Bohrung (9) innerhalb des Basisbauteils (3) eingeschoben ist.

6. Spannvorrichtung (1) nach einem der Ansprüche 3 bis 5, **dadurch gekennzeichnet, dass** das Positionierungselement (26) in seiner Längsrichtung quer zu der Längsachse (10) des Aufnahmeloches (4) ausgerichtet angeordnet ist.

7. Spannvorrichtung (1) nach einem der Ansprüche 3 bis 6, **dadurch gekennzeichnet, dass** sich das Positionierungselement (26) in seiner Längsrichtung zylindrisch erstreckt.

8. Spannvorrichtung (1) nach einem der Ansprüche 3 bis 7, **dadurch gekennzeichnet, dass** das Positionierungselement (26) das Aufnahmeloch (4) in seiner Querrichtung vollständig durchquert.

9. Werkzeugsystem (11) mit einem Werkzeug (2) sowie einer Spannvorrichtung (1) nach einem der Ansprüche 1 bis 8, wobei das Werkzeug (2) eine Ausrichterhabenheit (12) aufweist, die an dem Drehsicherungsabschnitt (8) in zumindest einer Arbeitsstellung des Werkzeugsystems (11) verdrehsicher und axial fest anliegt.

10. Werkzeugsystem (11) nach Anspruch 9, **dadurch gekennzeichnet, dass** die Ausrichterhabenheit (12) an einer axialen Stirnseite (13) des Werkzeuges (2) angeordnet ist oder diese ausbildet, wobei die Stirnseite (13) in der Arbeitsstellung in das Aufnahmeloch (4) eingeschoben ist.

11. Werkzeugsystem (11) nach Anspruch 9 oder 10, **dadurch gekennzeichnet, dass** die Ausrichterhabenheit (12) Teil eines abgeschrägten Endes des Werkzeuges (2) ist.

12. Werkzeugsystem (11) nach einem der Ansprüche 9 bis 11, **dadurch gekennzeichnet, dass** die Ausrichterhabenheit (12) in einem in radialer Richtung des Aufnahmeloches (4) zwischen dem Drehsicherungsabschnitt (8) und dem Basisbauteil (3) gebildeten Zwischenraum (25) in der Arbeitsstellung verdrehsicher eingeschoben ist.

13. Werkzeugsystem (11) nach einem der Ansprüche 9 bis 12, **dadurch gekennzeichnet, dass** das Werkzeug (2) als eine für eine elektrochemische Bearbeitung eines Werkstückes (16) vorbereitete Kathode (15) ausgebildet ist.
